# EUROPEAN PATENT SPECIFICATION

(11) **EP 4 513 805 B1**
(45) Date of publication and mention of the grant of the patent: **01.07.2026**
(21) Application number: 22937906.0
(22) Date of filing: 21.04.2022
(51) Int. Cl.: H04L 1/1829, H04L 1/1867, H04L 5/00

(54) **FEEDBACK INFORMATION SENDING/RECEIVING METHOD AND APPARATUS**
VERFAHREN UND VORRICHTUNG ZUM SENDEN/EMPFANGEN VON RÜCKKOPPLUNGSINFORMATIONEN
PROCÉDÉ ET APPAREIL D'ENVOI/RÉCEPTION D'INFORMATIONS DE RÉTROACTION

(43) Date of publication of application: 26.02.2025
(73) Proprietor: Beijing Xiaomi Mobile Software Co., Ltd., Beijing 100085 (CN)
(72) Inventor: ZHAO, Qun, Beijing 100085 (CN); ZHAO, Wensu, Beijing 100085 (CN)
(74) Representative: Hersina, Günter
(86) International application number: PCT/CN2022/088323
(87) International publication number: WO 2023/201670

(56) References cited:
- EP-A1- 4 447 357
- WO-A1-2021/189428
- CN-A- 108 605 330
- CN-A- 111 800 244
- CN-A- 112 930 707
- US-A1- 2021 091 901
- US-A1- 2021 091 901
- US-A1- 2021 160 857
- SHARP: "Remaining issues on physical layer structure for NR sidelink", 3GPP DRAFT; R1-2002386, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Online Meeting ;20200420 - 20200430, 11 April 2020 (2020-04-11), Mobile Competence Centre ; 650, route des Lucioles ; F-06921 Sophia-Antipolis Cedex ; France , XP051875595

## Description

### TECHNICAL FIELD

The disclosure relates to the field of communication technology, in particular to a method for sending/receiving feedback information and an apparatus thereof.

### BACKGROUND

When terminal devices communicate with each other via a sidelink (SL) on an unlicensed spectrum or a shared spectrum, how to use interlaced resource blocks (IRBs) to transmit feedback information of a plurality of physical SL control channels (PSCCHs)/physical SL shared channels (PSSCHs) becomes a problem to be solved.

WO2021/189428A1 relates to methods and apparatuses. The method performed by a first user equipment (UE) for wireless communication includes: receiving, from a second UE, SL control information (SCI) on a first interlace on a carrier, in which the SCI schedules data transmission on the carrier, and the first interlace includes evenly-spaced resource blocks (RBs) in frequency domain; and transmitting, from the first UE, corresponding to the data transmission, a hybrid automatic repeat request acknowledgement (HARQ-ACK) feedback on a first feedback resource based on the SCI.

US2021/0091901A1 relates to wireless communications systems and methods related to sidelink communication in a shared radio frequency band. A first UE receives, from a base station, a configuration for frequency-interlaced resources in a shared radio frequency band for sidelink communication between the first UE and a second UE. The first UE communicates, with the second UE, the sidelink communication using the frequency-interlaced resources.

EP4447357A1 relates to a data transmission method. The method includes the following. A receiver device receives N transport blocks (TBs), where N is a positive integer; the receiver device obtains an upper limit of a quantity of transmissions of a feedback channel and a parameter of an interlace, and sends feedback information for M TBs in the N TBs through the interlace based on the parameter of the interlace and the upper limit of the quantity of transmission, where M is a positive integer, M is less than or equal to N, M is less than or equal to a quantity upper limit P of feedback information sent by the receiver device, the quantity upper limit P is determined based on the upper limit of the quantity of transmissions and the parameter of the interlace, and P is a positive integer.

### SUMMARY

Embodiments of the disclosure provide a method for sending feedback information according to independent claim 1, a method for receiving feedback information according to independent claim 10, a communication device according to independent claim 11, and a computer readable storage medium according to independent claim 12. Further aspects of the present application are defined by the dependent claims. Sending and receiving of N pieces of different feedback information are performed by one first interlaced resource block (IRB). When a terminal device receives a plurality of physical sidelink control channel (PSCCH)/physical sidelink shared channel (PSSCH) transmissions, the feedback information corresponding to these PSCCH/PSSCH transmissions can be mapped to the same IRB for transmission instead of performing transmission of the plurality of feedback information on a plurality of IRBs, which can avoid interference and improve reliability and transmission efficiency of a system.

### BRIEF DESCRIPTION OF THE DRAWINGS

FIG. 1 is a schematic diagram of a communication system provided by an embodiment of the disclosure.
FIG. 2 is a flowchart of a method for sending feedback information provided by an embodiment of the disclosure.
FIG. 3 is a flowchart of a method for sending feedback information provided by an embodiment of the disclosure.
FIG. 4 is a flowchart of a method for sending feedback information provided by an embodiment of the disclosure.
FIG. 5 is a flowchart of a method for sending feedback information provided by an embodiment of the disclosure.
FIG. 6 is a flowchart of a method for sending feedback information provided by an embodiment of the disclosure.
FIG. 7 is a flowchart of a method for sending feedback information provided by an embodiment of the disclosure.
FIG. 8 is a flowchart of a method for receiving feedback information provided by an embodiment of the disclosure.
FIG. 9 is a flowchart of a method for receiving feedback information provided by an embodiment of the disclosure.
FIG. 10 is a flowchart of a method for receiving feedback information provided by an embodiment of the disclosure.
FIG. 11 is a flowchart of a method for receiving feedback information provided by an embodiment of the disclosure.
FIG. 12 is a flowchart of a method for receiving feedback information provided by an embodiment of the disclosure.
FIG. 13 is a flowchart of a method for receiving feedback information provided by an embodiment of the disclosure.
FIG. 14 is a flowchart of a method for receiving feedback information provided by an embodiment of the disclosure.
FIG. 15 is a schematic diagram of a communication device provided by an embodiment of the disclosure.
FIG. 16 is a schematic diagram of a communication device provided by an embodiment of the disclosure.
FIG. 17 is a schematic diagram of a chip provided by an embodiment of the disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with embodiments of the disclosure. Instead, they are merely examples of apparatuses and methods consistent with aspects related to the disclosure as recited in the appended claims.

The terms used in the disclosure are only for the purpose of describing specific embodiments, and are not intended to limit embodiments of the disclosure. The singular forms of "a" and "the" used in the disclosure and appended claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in embodiments of the disclosure to describe various types of information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if" as used herein may be interpreted as "when", "upon" or "in response to determining".

For the purposes of brevity and ease of understanding, the terms "greater than" or "less than", "higher than" or "lower than" are used herein to represent size relationships. Those skilled in the art understand that the term "greater than" also covers the meaning of "greater than or equal to" and the term "less than" also covers the meaning of "less than or equal to", and the term "higher than" also covers the meaning of "higher than or equal to", and the term "lower than" also covers the meaning of "lower than or equal to".

For ease of understanding, the terms involved in the disclosure are first introduced.

Terminal devices communicate with each other via a sidelink (SL). The SL includes a physical SL control channel (PSCCH) and a physical SL shared channel (PSSCH). SL control information (SCI) in the PSCCH may indicate information required for receiving the PSSCH, such as PSSCH channel resources and transmission parameters. The PSSCH is used to carry data of SL communication.

A physical resource block (PRB) is used to describe an allocation condition of actual physical resources.

Interlaced resource blocks (IRBs) refer to a fixed number of resource blocks between two consecutive IRBs in the same IRB index. For example, in a case that two consecutive IRBs are spaced by M resource blocks, the IRB with an index being m includes PRBs which are {m, m+M, 2M+m, 3M+m, ...}, where m ∈ {0, 1, ..., M-1}. In a new radio unlicensed (NR-U) system, IRB structures are defined for two subcarrier spaces (SCSs) of 15kHz and 30kHz respectively. For if SCS=15kHz and M=10, there are 10 IRB indexes, and if SCS=30kHz and M=5, there are 5 IRB indexes. That is, if SCS=30khz and M=5, there are a total of 5 IRB indexes. For a first IRB index, that is, an IRB with an index being 0, the PRBs corresponding to the IRBs contained in the IRB index are {0, 5, 10, 15, 20, 25, 30, 35, 40, 45}.

In order to better understand the method for sending/receiving feedback information disclosed in embodiments of the disclosure, a communication system to which embodiments of the disclosure can be applied is first described below.

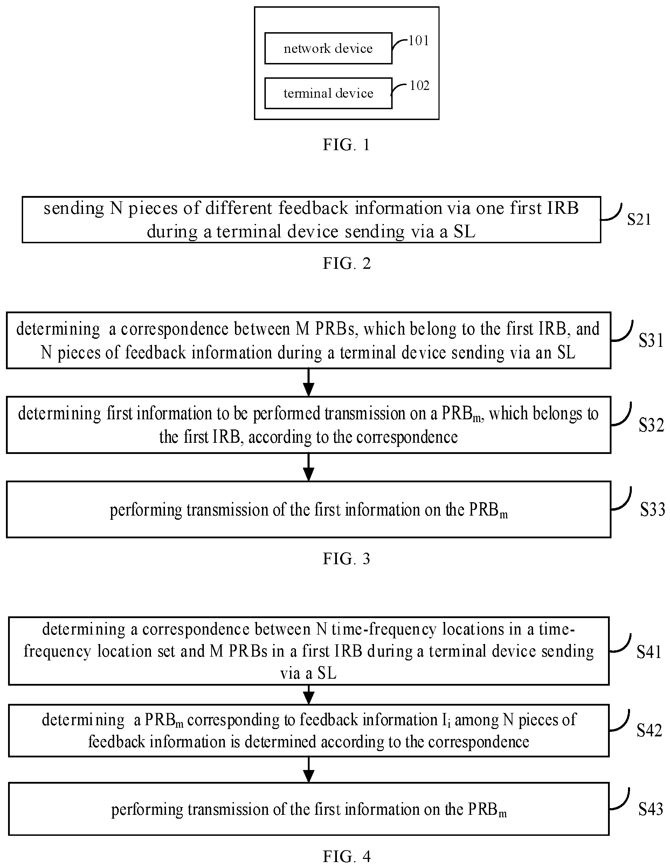

As illustrated in FIG. 1, FIG. 1 is a schematic diagram of a communication system according to an embodiment of the disclosure. The communication system may include, but is not limited to, one network device and one terminal device. The number and the form of devices illustrated in FIG. 1 are only for examples and do not constitute a limitation on embodiments of the disclosure, and two or more network devices and two or more terminal devices may be included in practical applications. The communication system illustrated in FIG. 1 includes, for example, one network device 101 and one terminal device 102.

It is noteworthy that the technical solution of embodiments of the disclosure can be applied to various communication systems, such as, a long term evolution (LTE) system, a 5th generation (5G) mobile communication system, a 5G new radio (NR) system, or other future new mobile communication systems. It should also be noted that SL in embodiments of the disclosure may also be referred to as a direct link or a device-to-device link.

The network device 101 in embodiments of the disclosure is an entity on a network side for transmitting or receiving signals. For example, the network device 101 may be an evolved NodeB (eNB), a transmission reception point (TRP), a next generation NodeB (gNB) in a NR system, a base station in other future mobile communication systems, or an access node in a wireless fidelity (WiFi) system. The specific technology and specific device form adopted by the network device are not limited in embodiments of the disclosure. The network device according to embodiments of the disclosure may be composed of a central unit (CU) and a distributed unit (DU). The CU may also be called control unit. The use of CU-DU structure allows to divide a protocol layer of the network device, such as a base station, such that some of the protocol layer functions are placed in the CU for centralized control, and some or all of the remaining protocol layer functions are distributed in the DU, and the DU is centrally controlled by the CU.

The terminal device 102 in embodiments of the disclosure is an entity on a user side for receiving or transmitting signals, such as a cellular phone. The terminal device may also be referred to as terminal, user equipment (UE), mobile station (MS), mobile terminal (MT), and the like. The terminal device can be a car with communication functions, a smart car, a mobile phone, a wearable devices, a Pad, a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. The specific technology and specific device form adopted by the terminal device are not limited in embodiments of the disclosure.

For SL communication, there are 4 SL transmission modes. SL transmission mode 1 and SL transmission mode 2 are used for device-to-device (D2D) communication. SL transmission mode 3 and SL transmission mode 4 are used for vehicle to everything (V2X) communication. When SL transmission mode 3 is adopted, resource allocation is scheduled by the network device 101. In detail, the network device 101 may send resource allocation information to the terminal device 102, and then the terminal device 102 allocates resources to the other terminal device, so that the other terminal device can send information to the network device 101 using the allocated resources. In the V2X communication, a terminal device with better signal or higher reliability may be used as the terminal device 102. The first terminal device in embodiments of the disclosure may refer to the terminal device 102, and the second terminal device may refer to the other terminal device.

It is understandable that the communication system described in embodiments of the disclosure is intended to clearly illustrate the technical solution according to embodiments of the disclosure, and does not constitute a limitation on the technical solution according to embodiments of the disclosure. It is understandable by those skilled in the art that as system architectures evolve and new business scenarios emerge, the technical solution according to embodiments of the disclosure are also applicable to similar technical problems.

A method for sending/receiving feedback information and an apparatus thereof provided in the disclosure are described in detail below in combination with the accompanying drawings.

As illustrated in FIG. 2, FIG. 2 is a flowchart of a method for sending feedback information provided by an embodiment of the disclosure. The method is performed by a terminal device. As illustrated in FIG. 2, the method includes, but is not limited to, following steps.

At step S21, N pieces of different feedback information are sent via one first interlaced resource block (IRB) during a terminal device sending via a sidelink (SL).

N is a positive integer.

Optionally, the terminal device may communicate via the SL on an unlicensed spectrum or a shared spectrum.

In an embodiment of the disclosure, the terminal device may receive N PSCCH or PSSCH transmissions, and need to provide feedback on the feedback information corresponding to these PSCCH/PSSCH transmissions. Optionally, the feedback information may be provided through a physical SL feedback channel (PSFCH).

Optionally, one of the N pieces of feedback information is a hybrid automatic repeat request-acknowledgement (HARQ-ACK) corresponding to a PSCCH/PSSCH transmission.

Optionally, the terminal device may acquire a SL resource pool for the PSCCH and/or PSSCH. The SL resource pool includes a plurality of IRBs. In an embodiment of the disclosure, the terminal device may perform feedback on the N pieces of feedback information using one first IRB of the plurality of IRBs, i.e., the terminal device may map the N pieces of feedback information to different frequency-domain resources on the first IRB, and send the N pieces of feedback information via different frequency-domain resources on the first IRB. In some embodiments, the first IRB may be determined from the plurality of IRBs corresponding to the terminal device based on frequency-domain locations and/or indexes of the IRBs.

For example, the frequency-domain resources on the first IRB are PRBs. The first IRB includes M PRBs, where M is a positive integer greater than or equal to 1. That is, the terminal device may map the N pieces of feedback information to M PRBs on the first IRB for sending.

In an embodiment of the disclosure, sending of N pieces of different feedback information are performed by one first interlaced resource block (IRB) during the terminal device sending via the SL. In an embodiment of the disclosure, when the terminal device receives the plurality of PSCCH/PSSCH transmissions, the feedback information corresponding to these PSCCH/PSSCH transmissions can be mapped to the same IRB for transmission instead of performing transmission of the plurality of feedback information on a plurality of IRBs, which can avoid interference and improve reliability and transmission efficiency of a system.

As illustrated in FIG. 3, FIG. 3 is a flowchart of a method for sending feedback information provided by an embodiment of the disclosure. The method is performed by a terminal device. As illustrated in FIG. 3, the method includes, but is not limited to, following steps.

At step S31, a correspondence between M PRBs, which belong to the first IRB, and N pieces of feedback information is determined during a terminal device sending via an SL.

M is a positive integer and indicates a number of PRBs included in the first IRB.

Optionally, the first IRB may include M PRBs. In order to perform transmission of the N pieces of feedback information via the first IRB, in an embodiment of the disclosure, there is the correspondence between the M PRBs which belong to the first IRB, and the N pieces of feedback information. Optionally, the terminal device may determine the correspondence through a network indication or a network configuration, or a mapping relation between the M PRBs included in the first IRB and the N pieces of feedback information based on a predefined mapping rule or preconfigured mapping rule.

In an embodiment of the disclosure, the above correspondence may indicate a PRB corresponding to each feedback information. For example, feedback information Iᵢ corresponds to a PRBₘ, and feedback information Iⱼ corresponds to a PRBₙ and a PRB*ₗ*. That is, the correspondence may indicate one or more PRBs occupied for performing transmission of any one feedback information. Optionally, the correspondence may be a list that includes a mapping relation between the M PRBs included in the first IRB and the N pieces of feedback information.

At step S32, first information to be transmitted on a PRBₘ, which belongs to the first IRB, is determined according to the correspondence.

The PRBₘ is one of the M PRBs, and a value of m is ranging from 1 to M.

It is noted that the first information is one feedback information in the N pieces of feedback information, or the first information is not feedback information in the N pieces of feedback information. That is, the first information may also be feedback information that does not indicate any feedback information in the N pieces of feedback information, i.e., may be information or a signal other than the N pieces of feedback information.

Optionally, in a case that the first information does not indicate any feedback information in the N pieces of feedback information, the first information to be transmitted on the PRBₘ can be any information or signal other than the N feedback information. Optionally, the first information may be a predefined signal, a pre-configured signal, or a signal configured by the network device via a downlink signaling. That is, the predefined signal, the pre-configured signal, or the signal configured by the network device via the downlink signaling does not indicate any feedback information in the N pieces of feedback information.

Optionally, the terminal device may determine a base sequence and/or a cyclic shift value. For example, the base sequence and/or the cyclic shift value may be configured through predefinition, or pre-configuration, or by the network device via the downlink signaling. The first information to be transmitted over the PRBₘ is determined based on the base sequence and/or the cyclic shift value.

At step S33, transmission of the first information is performed on the PRBₘ.

Optionally, when determining that the first information to be transmitted on the PRBₘ is one feedback information in the N pieces of feedback information, transmission of the feedback information may be performed directly on the PRBₘ.

Optionally, when determining that the first information to be transmitted on the PRBₘ does not belong to the N pieces of feedback information, i.e., when the first information is the predefined signal, or the pre-configured signal, or the signal configured by the network device via the downlink signaling, transmission of the first information is performed directly on the PRBₘ.

When determining that the first information to be transmitted on the PRBₘ does not belong to the N pieces of feedback information, one specific feedback information in the N pieces of feedback information, such as the feedback information with the highest priority, is used to replace the first information, and transmission of the feedback information with the highest priority is performed on the PRBₘ.

Optionally, the signal to be transmitted on the PRBₘ is determined based on the base sequence and/or the cyclic shift value.

Optionally, transmission of the first information is performed on the PRBₘ using different cyclic shift values of the base sequence.

In an embodiment of the disclosure, when the terminal device receives the plurality of PSCCH/PSSCH transmissions, the feedback information corresponding to these PSCCH/PSSCH transmissions can be mapped to the same IRB for transmission instead of performing transmission of the plurality of feedback information on a plurality of IRBs, which can avoid interference and improve reliability and transmission efficiency of a system.

As illustrated in FIG. 4, FIG. 4 is a flowchart of a method for sending feedback information provided by an embodiment of the disclosure. The method is performed by a terminal device. As illustrated in FIG. 4, the method may include, but is not limited to, following steps.

At step S41, a correspondence between N time-frequency locations in a time-frequency location set and M PRBs in a first IRB is determined during a terminal device sending via a SL.

The time-frequency location set includes a plurality of time-frequency locations. The time-frequency location includes at least one of a time-domain location, a frequency-domain location and a time-frequency start location.

Optionally, the time-frequency location set may be a set of possible time-domain locations and/or frequency-domain locations for PSCCH/PSSCH transmission corresponding to feedback information to be transmitted using the first IRB. For example, the time-frequency location set is a set formed by time-domain locations and/or frequency-domain locations of a PSCCH/PSSCH corresponding to the first IRB: {{time-domain location 1, frequency-domain location 1}, {time-domain location 2, frequency-domain location 2}...,{time-domain location N, frequency-domain location N}}. For another example, the time-frequency location set is a set formed by time-domain locations of the PSCCH/PSSCH corresponding to the first IRB: {time-domain location 1, time-domain location 2, ..., time-domain location N}. The time-frequency location set may also be a set formed by frequency-domain locations of the PSCCH/PSSCH corresponding to the first IRB: {frequency-domain location 1, frequency-domain location 2, ..., frequency-domain location N}.

Optionally, the time-frequency location set is a set of possible time-frequency start locations for PSCCH/PSSCH transmission corresponding to the feedback information to be transmitted using the first IRB. For example, the time-frequency location set may be a set formed by time-domain start locations and frequency-domain start locations of a PSCCH/PSSCH corresponding to the first IRB: {{time-domain start location 1, frequency-domain start location 1}, {time-domain start location 2, frequency-domain start location 2}..., {time-domain start location N, frequency-domain start location N}}. For another example, the time-frequency location set may be a set formed by time-domain start locations of the PSCCH/PSSCH corresponding to the first IRB: {time-domain start location 1, time-domain start location 2, ..., time-domain start location N}. The time-frequency location set may also be a set formed by f frequency-domain start locations of the PSCCH/PSSCH corresponding to the first IRB: {frequency-domain start location 1, frequency-domain start location 2, ..., frequency-domain start location N}.

Optionally, the time-frequency location set is a set of time-frequency resource locations within a feedback time window in a SL resource pool. A start time and an end time of the feedback time window are determined according to a time location where the first IRB is. For example, a slot where the first IRB is slot#n, the PSCCH/PSSCH that performs transmission of the feedback information on the first IRB can only be within a time window [n-X, n-Y]. A set of time-frequency resource locations within the time window is the time-frequency location set. Values of X and Y are predefined and/or (pre)configured.

In a possible implementation, determining the correspondence between the N time-frequency locations and the M PRBs in the first IRB includes:

dividing the M PRBs included in the first IRB into N orthogonal PRB subsets in a first preset order, e.g., dividing the M PRBs into the N orthogonal PRB subsets in an ascending order in the frequency domain, or dividing the M PRBs into the N orthogonal PRB subsets in a descending order in the frequency domain;

sorting time-frequency locations in the time-frequency location set in a second preset order, e.g., sorting the time-frequency locations in the time-frequency location set in a certain order in the time domain or in a certain order in the frequency domain, e.g., sorting the time locations from the previous time to the later time in the time domain, or sorting the time-frequency locations from the low to the high in the frequency domain; and

after sorting, obtaining the correspondence between the N time-frequency locations and the M PRBs in the first IRB by mapping the sorted time-frequency locations to the PRB subsets one-to-one.

It should be noted that the time-domain location is a time unit where a PSCCH/PSSCH transmission is. The time unit can be one of: an orthogonal frequency division multiplexing (OFDM) symbol, a sub-slot, a slot or a sub-frame.

Optionally, the frequency-domain location is a PRB, an IRB or a sub-channel of a lowest frequency location used for the PSCCH/PSSCH transmission.

At step S42, a PRBₘ corresponding to feedback information Iᵢ among N pieces of feedback information is determined according to the correspondence.

Optionally, a time-frequency location corresponding to the feedback information Iᵢ occupied for the PSCCH and/or PSSCH transmission is determined. Based on the time-frequency location corresponding to the feedback information Iᵢ, the PRBₘ corresponding to the time-frequency location, i.e., the PRBₘ corresponding to the feedback information Ii, can be determined by querying the above correspondence.

In an embodiment of the disclosure, the correspondence is a correspondence between the time-frequency locations and the PRB subsets. The PRBₘ corresponding to the feedback information Iᵢ may be determined based on the correspondence between the time-frequency locations and the PRB subsets. Optionally, the time-frequency location corresponding to the feedback information Iᵢ occupied for the PSCCH and/or PSSCH transmission is determined, and then the PRB subset associated with the time-frequency location corresponding to the feedback information Iᵢ is determined from the above correspondence. A PRB included in the PRB subset associated with the time-frequency location corresponding to the feedback information Iᵢ is determined as the PRBₘ corresponding to the feedback information Iᵢ.

At step S43, transmission of the feedback information Iᵢ is performed on the PRBₘ.

The specific implementation of the step S43 can be referred to the relevant contents documented in the above embodiments and will not be repeated here.

In an embodiment of the disclosure, when the terminal device receives the plurality of PSCCH/PSSCH transmissions, the feedback information corresponding to these PSCCH/PSSCH transmissions can be mapped to the same IRB for transmission instead of performing transmission of the plurality of feedback information on a plurality of IRBs, which can avoid interference and improve reliability and transmission efficiency of a system.

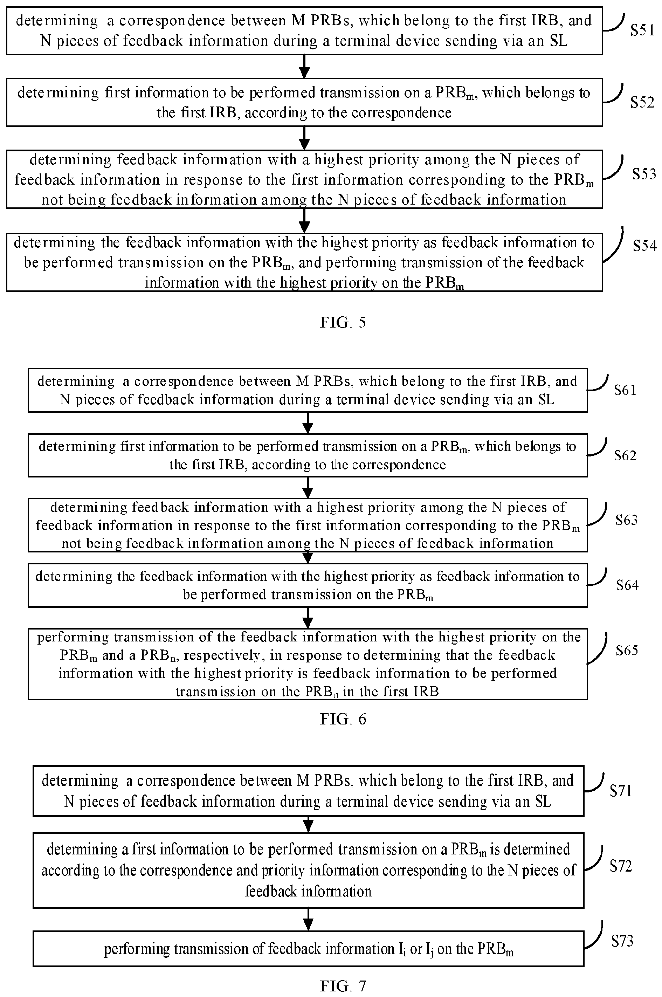

As illustrated in FIG. 5, FIG. 5 is a flowchart of a method for sending feedback information provided by an embodiment of the disclosure. The method is performed by a terminal device. As illustrated in FIG. 5, the method may include, but is not limited to, following steps.

At step S51, a correspondence between M PRBs, which belong to the first IRB, and N pieces of feedback information is determined during a terminal device sending via an SL.

At step S52, first information to be transmitted on a PRBₘ, which belongs to the first IRB, is determined according to the correspondence.

The specific implementations of steps S51-S52 can be referred to any of the possible implementations of the embodiments of the disclosure and will not be repeated herein.

At step S53, feedback information with a highest priority among the N pieces of feedback information is determined in response to the first information corresponding to the PRBₘ not being feedback information among the N pieces of feedback information.

Each feedback information of the N pieces of feedback information is configured with a corresponding priority, and priorities of different feedback information may be the same or different. In an embodiment of the disclosure, when the first information corresponding to the PRBₘ is not the feedback information among the N pieces of feedback information, i.e., the first information is information or a signal other than the N pieces of feedback information, the feedback information with the highest priority is determined from the N pieces of feedback information based on the priority information of the feedback information among the N pieces of feedback information.

At step S54, the feedback information with the highest priority is determined as feedback information to be transmitted on the PRBₘ, and transmission of the feedback information with the highest priority is performed on the PRBₘ.

Optionally, there may be two or more pieces of feedback information with the highest priority among the N pieces of feedback information, in which case one of the two or more pieces of feedback information with the highest priority is determined as the feedback information to be transmitted on the PRBₘ according to an agreement or an indication.

In an embodiment of the disclosure, the correspondence between the M PRBs of the first IRB and the N feedback information is determined. If it is determined that the first information corresponding to the PRBₘ does not belong to the N pieces of feedback information, the feedback information with the highest priority among the N pieces of feedback information may be re-mapped to the PRBₘ, which may increase a transmission success rate of the feedback information with the highest priority.

As illustrated in FIG. 6, FIG. 6 is a flowchart of a method for sending feedback information provided by an embodiment of the disclosure. The method is performed by a terminal device. As illustrated in FIG. 6, the method includes, but is not limited to, following steps.

At step S61, a correspondence between M PRBs, which belong to the first IRB, and N pieces of feedback information is determined during a terminal device sending via an SL.

At step S62, first information to be transmitted on a PRBₘ, which belongs to the first IRB, is determined according to the correspondence.

At step S63, feedback information with a highest priority among the N pieces of feedback information is determined in response to the first information corresponding to the PRBₘ not being feedback information among the N pieces of feedback information.

At step S64, the feedback information with the highest priority is determined as feedback information to be transmitted on the PRBₘ.

The specific implementations of steps S61-S64 can be found in the relevant contents documented in the above embodiments, and will not be repeated here.

At step S65, transmission of the feedback information with the highest priority is performed on the PRBₘ and a PRBₙ, respectively, in response to determining that the feedback information with the highest priority is feedback information to be transmitted on the PRBₙ in the first IRB.

In an embodiment of the disclosure, the terminal device may determine that the feedback information with the highest priority is feedback information Iₖ corresponding to the PRBₙ based on the correspondence between the M PRBs belonging to the first IRB and the N feedback information. Optionally, physical layer transmission parameters to be transmitted over the PRBₘ and the PRBₙ may be the same or different. The physical layer transmission parameter includes at least one of a base sequence (SN), a cyclic shift (CS) value or a power.

That is, the feedback information with the highest priority is the feedback information Iₖ. The physical layer transmission parameter, such as the base sequence, the CS value and the power, used for performing transmission of the feedback information Iₖ on the PRBₘ may be the same as the physical layer transmission parameter used for performing transmission of the feedback information Iₖ on the PRBₙ determined based on the correspondence. Or, the physical layer transmission parameter, such as the base sequence, the CS value and the power used for performing transmission of the feedback information Iₖ on the PRBₘ may be different from the physical layer transmission parameter used for performing transmission of the feedback information Iₖ on the PRBₙ determined based on the correspondence.

For example, it is possible to define two non-overlapping CS value sets, namely, Set 1 {CS₁, CS₂, ..., Cₘ, ...} and Set 2 {CS₁', CS₂', ..., Cₘ', ...}. Elements in Set 1 correspond to elements in Set 2 one-to-one. Cₘ in Set 1 is used for sending the feedback information Iₖ on the PRBₘ, correspondingly, Cₘ' in Set 2 is used for sending the feedback information Iₖ on the PRBₙ.

For example, a base sequence SN1 is used for sending the feedback information Iₖ on the PRBₘ, and a base sequence SN2 is used for sending the feedback information Iₖ on the PRBₙ. Optionally, the two base sequences are different.

In an embodiment of the disclosure, transmission of the feedback information with the highest priority among the N pieces of feedback information may be performed on both PRBs, which increases a transmission success rate of the feedback information with the highest priority.

As illustrated in FIG. 7, FIG. 7 is a flowchart of a method for sending feedback information provided by an embodiment of the disclosure. The method is performed by a terminal device. As illustrated in FIG. 7, the method may include, but is not limited to, following steps.

At step S71, a correspondence between M PRBs, which belong to the first IRB, and N pieces of feedback information is determined during a terminal device sending via an SL.

At step S72, a first information to be transmitted on a PRBₘ is determined according to the correspondence and priority information corresponding to the N pieces of feedback information.

Optionally, based on the correspondence, it is determined that the PRBₘ corresponds to the feedback information Iᵢ among the N pieces of feedback information. With respect to the process of determining that the PRBₘ corresponds to the feedback information Iᵢ among the N feedback information based on the correspondence, reference may be made to the description of the relevant contents in the above embodiments and will not be repeated here.

Feedback information Iⱼ with a highest priority among other feedback information of the N pieces of feedback information excluding the feedback information Iᵢ is determined. Based on a priority corresponding to the feedback information Iᵢ and a priority corresponding to the feedback information Iⱼ, the feedback information to be transmitted on the PRBₘ is further determined. Optionally, by comparing the priority corresponding to the feedback information Iᵢ and the priority corresponding to the feedback information Iⱼ, in response to determining that the priority corresponding to the feedback information Iᵢ is not lower than the priority of the feedback information Iⱼ by a preset number of priorities, it is determined that the feedback information Iᵢ is the feedback information to be transmitted on the PRBₘ.

Optionally, it is determined that the priority corresponding to the feedback information Iᵢ is higher than the priority of the feedback information Iⱼ, or the priority corresponding to the feedback information Iᵢ is lower than the priority of the feedback information Iⱼ, but a difference in priority between the two is greater than the preset number of priorities, in which case it is determined that the feedback information Iⱼ is the feedback information to be transmitted on the PRBₘ.

For example, the priority of the feedback information Iᵢ is pᵢ and the priority of the feedback information Iⱼ is pⱼ, if pᵢ≤pⱼ+ X, under the case that the smaller the value the higher the priority and the larger the value the lower the priority, transmission of the feedback information Iⱼ is performed on the PRBₘ. If pi>pj+ X, transmission of the feedback information Iᵢ is performed on the PRBₘ. A value of X may be predefined, or preconfigured, or configured or indicated by a network device via a downlink control signaling.

At step S73, transmission of the feedback information Iᵢ or Ij is performed on the PRBₘ.

In an embodiment of the disclosure, when the terminal device receives the plurality of PSCCH/PSSCH transmissions, the feedback information corresponding to these PSCCH/PSSCH transmissions can be mapped to the same IRB for transmission instead of performing transmission of the plurality of feedback information on a plurality of IRBs, which can avoid interference and improve reliability and transmission efficiency of a system.

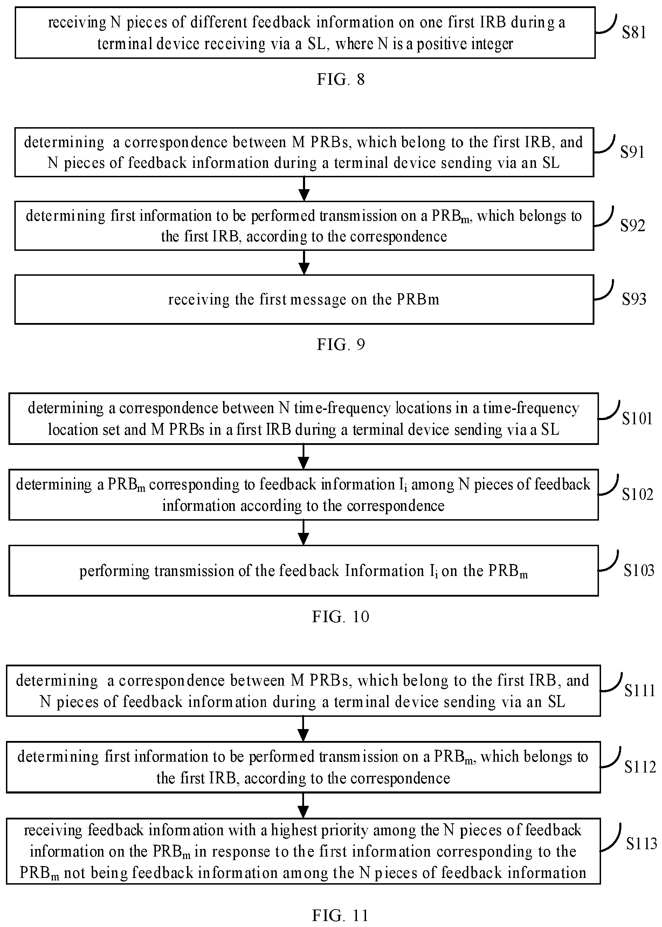

As illustrated in FIG. 8, FIG. 8 is a flowchart of a method for receiving feedback information provided by an embodiment of the disclosure. The method is performed by a terminal device. As illustrated in FIG. 8, the method includes, but is not limited to, the following steps.

At step S81, N pieces of different feedback information are received on one first interlaced resource block (IRB) during a terminal device receiving via a sidelink (SL), where N is a positive integer.

N is a positive integer.

Optionally, the terminal device may communicate via the SL on an unlicensed spectrum or a shared spectrum.

In an embodiment of the disclosure, the terminal device may send N PSCCH/PSSCH transmissions to another terminal device, and receives feedback information corresponding to these PSCCH/PSSCH transmissions sent by that terminal device. Optionally, the feedback information may be sent through a PSFCH.

Optionally, one of the N pieces of feedback information is a hybrid automatic repeat request-acknowledgement (HARQ-ACK) corresponding to a PSCCH/PSSCH transmission.

Optionally, the terminal device may acquire a SL resource pool for the PSCCH and/or PSSCH. The SL resource pool includes a plurality of IRBs. In an embodiment of the disclosure, the terminal device may receive the N pieces of feedback information using one first IRB, i.e., the N pieces of feedback information are mapped to different frequency-domain resources on the first IRB by another terminal device, and the terminal device receives the N pieces of feedback information through different frequency-domain resources on the first IRB. In some embodiments, the first IRB may be determined from the plurality of IRBs corresponding to the terminal device based on frequency-domain locations and/or indexes of the IRBs.

For example, the frequency-domain resources on the first IRB are PRBs. The first IRB includes

M PRBs, where M is a positive integer greater than or equal to 1. That is, the terminal device may receive on the M PRBs on the first IRB.

In an embodiment of the disclosure, receiving of N pieces of different feedback information are performed by one first interlaced resource block (IRB) during the terminal device sending via the SL. In an embodiment of the disclosure, when the terminal device receives the plurality of PSCCH/PSSCH transmissions, the feedback information corresponding to these PSCCH/PSSCH transmissions can be mapped to the same IRB for transmission instead of performing transmission of the plurality of feedback information on a plurality of IRBs, which can avoid interference and improve reliability and transmission efficiency of a system.

As illustrated in FIG. 9, FIG. 9 is a flowchart of a method for receiving feedback information provided by an embodiment of the disclosure. The method is performed by a terminal device. As illustrated in FIG. 9, the method includes, but is not limited to, the following steps.

At step S91, a correspondence between M PRBs, which belong to the first IRB, and N pieces of feedback information is determined during a terminal device sending via an SL.

At step S92, first information to be transmitted on a PRBₘ, which belongs to the first IRB, is determined according to the correspondence.

The specific implementations of steps S91-S92 can be referred to the relevant contents documented in the above embodiments and will not be repeated here.

At step S93, the first information is received on the PRBₘ.

Optionally, when determining that the first information to be transmitted on the PRBₘ is one feedback information in the N pieces of feedback information, the feedback information may be received directly on the PRBₘ.

Optionally, when determining that the first information to be transmitted on the PRBₘ does not belong to the N pieces of feedback information, i.e., when the first information is the predefined signal, or the pre-configured signal, or the signal configured by the network device via the downlink signaling, the signal may be received directly on the PRBₘ.

When determining that the first information to be transmitted on the PRBₘ does not belong to the N pieces of feedback information, one specific feedback information in the N pieces of feedback information, such as the feedback information with the highest priority, is used to replace the first information, and the feedback information with the highest priority may be received on the PRBₘ.

Optionally, the signal to be transmitted on the PRBₘ is determined based on the base sequence and/or the CS value.

Optionally, transmission of the first information is performed on the PRBₘ using different CS values of the base sequence.

In an embodiment of the disclosure, when the terminal device receives the plurality of PSCCH/PSSCH transmissions, the feedback information corresponding to these PSCCH/PSSCH transmissions can be mapped to the same IRB for transmission instead of performing transmission of the plurality of feedback information on a plurality of IRBs, which can avoid interference and improve reliability and transmission efficiency of a system.

As illustrated in FIG. 10, FIG. 10 is a flowchart of a method for receiving feedback information provided by an embodiment of the disclosure. The method is performed by a terminal device. As illustrated in FIG. 10, the method may include, but is not limited to, following steps.

At step S101, a correspondence between N time-frequency locations in a time-frequency location set and M PRBs in a first IRB is determined during a terminal device sending via a SL.

At step S102, a PRBₘ corresponding to feedback information Iᵢ among N pieces of feedback information is determined according to the correspondence.

The specific implementations of steps S101-S102 can be referred to the relevant contents documented in the above embodiments and will not be repeated here.

At step S103, transmission of the feedback information Iᵢ is performed on the PRBₘ.

The specific implementations of step S103 can be referred to the relevant contents documented in the above embodiments and will not be repeated here.

In an embodiment of the disclosure, when the terminal device receives the plurality of PSCCH/PSSCH transmissions, the feedback information corresponding to these PSCCH/PSSCH transmissions can be mapped to the same IRB for transmission instead of performing transmission of the plurality of feedback information on a plurality of IRBs, which can avoid interference and improve reliability and transmission efficiency of a system.

As illustrated in FIG. 11, FIG. 11 is a flowchart of a method for receiving a feedback information provided by an embodiment of the disclosure. The method is performed by a terminal device. As illustrated in FIG. 11, the method may include, but is not limited to, following steps.

At step S111, a correspondence between M PRBs, which belong to the first IRB, and N pieces of feedback information is determined during a terminal device sending via an SL.

At step S112, first information to be transmitted on a PRBₘ, which belongs to the first IRB, is determined according to the correspondence.

The specific implementations of steps S111-S112 can be referred to any of the possible implementations of the embodiments of the disclosure and will not be repeated herein.

At step S113, feedback information with a highest priority among the N pieces of feedback information is received on the PRBₘ in response to the first information corresponding to the PRBₘ not being feedback information among the N pieces of feedback information.

In an embodiment of the disclosure, according to the correspondence between the M PRBs, which belong to the first IRB, and the N pieces of feedback information, if it is determined that the first information corresponding to the PRBₘ does not belong to the N pieces of feedback information, transmission of the feedback information with the highest priority among the N pieces of feedback information can be performed on the PRBₘ, which increases a transmission success rate of the feedback information with the highest priority.

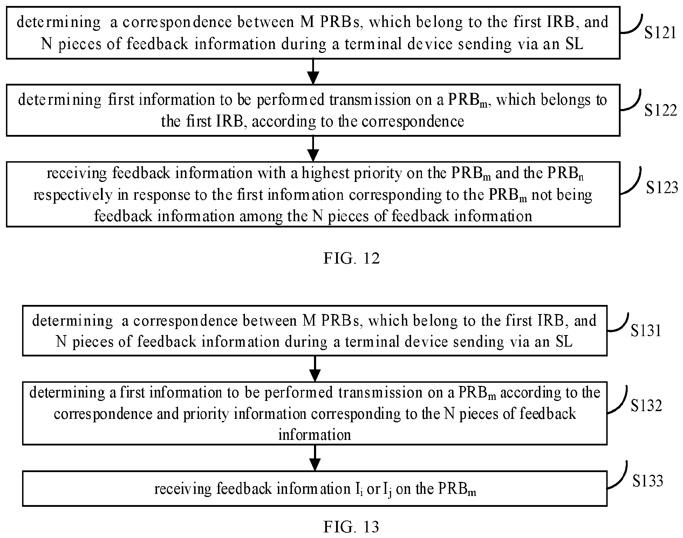

As illustrated in FIG. 12, FIG. 12 is a flowchart of a method for receiving feedback information provided by an embodiment of the disclosure. The method is performed by a terminal device. As illustrated in FIG. 12, the method includes, but is not limited to, following steps.

At step S121, a correspondence between M PRBs, which belong to the first IRB, and N pieces of feedback information is determined during a terminal device sending via an SL.

At step S122, first information to be transmitted on a PRBₘ, which belongs to the first IRB, is determined according to the correspondence.

The specific implementations of steps S121-S122 can be referred to any of the possible implementations of the embodiments of the disclosure and will not be repeated herein.

At step S123, feedback information with a highest priority is received on the PRBₘ and the PRBₙ respectively in response to the first information corresponding to the PRBₘ not being feedback information among the N pieces of feedback information.

Further, the terminal device determines that the feedback information with the highest priority is feedback information Iₖ corresponding to the PRBₙ based on the correspondence between the M PRBs belonging to the first IRB and the N feedback information. Optionally, physical layer transmission parameters to be transmitted over the PRBₘ and the PRBₙ may be the same or different. The physical layer transmission parameter includes at least one of a base sequence (SN), a cyclic shift (CS) value or a power.

That is, the feedback information with the highest priority is the feedback information Iₖ. The physical layer transmission parameter, such as the base sequence, the CS value and the power, used for performing transmission of the feedback information Iₖ on the PRBₘ may be the same as the physical layer transmission parameter used for performing transmission of the feedback information Iₖ on the PRBₙ determined based on the correspondence. Or, the physical layer transmission parameter, such as the base sequence, the CS value and the power used for performing transmission of the feedback information Iₖ on the PRBₘ may be the different from the physical layer transmission parameter used for performing transmission of the feedback information Iₖ on the PRBₙ determined based on the correspondence.

In an embodiment of the disclosure, transmission of the feedback information with the highest priority among the N pieces of feedback information may be performed on both PRBs, which increases a transmission success rate of the feedback information with the highest priority.

As illustrated in FIG. 13, FIG. 13 is a flowchart of a method for receiving feedback information provided by an embodiment of the disclosure. The method is performed by a terminal device. As illustrated in FIG. 13, the method may include, but is not limited to, following steps.

At step S131, a correspondence between M PRBs, which belong to the first IRB, and N pieces of feedback information is determined during a terminal device sending via an SL.

At step S132, a first information to be transmitted on a PRBₘ is determined according to the correspondence and priority information corresponding to the N pieces of feedback information.

Optionally, based on the correspondence, it is determined that the PRBₘ corresponds to the feedback information Iᵢ among the N pieces of feedback information. With respect to the process of determining that the PRBₘ corresponds to the feedback information Iᵢ among the N feedback information based on the correspondence, reference may be made to the description of the relevant contents in the above embodiments and will not be repeated here.

Feedback information Iⱼ with a highest priority among other feedback information of the N pieces of feedback information excluding the feedback information Iᵢ is determined. Based on a priority corresponding to the feedback information Iᵢ and a priority corresponding to the feedback information Iⱼ, the feedback information to be transmitted on the PRBₘ is further determined. Optionally, by comparing the priority corresponding to the feedback information Iᵢ and the priority corresponding to the feedback information Iⱼ, in response to determining that the priority corresponding to the feedback information Iᵢ is not lower than the priority of the feedback information Iⱼ by a preset number of priorities, it is determined that the feedback information Iᵢ is the feedback information to be transmitted on the PRBₘ.

Optionally, it is determined that the priority corresponding to the feedback information Iᵢ is higher than the priority of the feedback information Iⱼ, or the priority corresponding to the feedback information Iᵢ is lower than the priority of the feedback information Iⱼ, but a difference in priority between the two is greater than the preset number of priorities, in which case it is determined that the feedback information Iⱼ is the feedback information to be transmitted on the PRBₘ.

For example, the priority of the feedback information Iᵢ is pᵢ and the priority of the feedback information Iⱼ is pⱼ, if pᵢ≤pⱼ+ X, under the case that the smaller the value the higher the priority and the larger the value the lower the priority, transmission of the feedback information Iⱼ is performed on the PRBₘ. If pi>pj+ X, transmission of the feedback information Iᵢ is performed on the PRBₘ. A value of X may be predefined, or preconfigured, or configured or indicated by a network device via a downlink control signaling.

At step S133, feedback information Iᵢ or Ij is received on the PRBₘ.

In an embodiment of the disclosure, when the terminal device receives the plurality of PSCCH/PSSCH transmissions, the feedback information corresponding to these PSCCH/PSSCH transmissions can be mapped to the same IRB for transmission instead of performing transmission of the plurality of feedback information on a plurality of IRBs, which can avoid interference and improve reliability and transmission efficiency of a system.

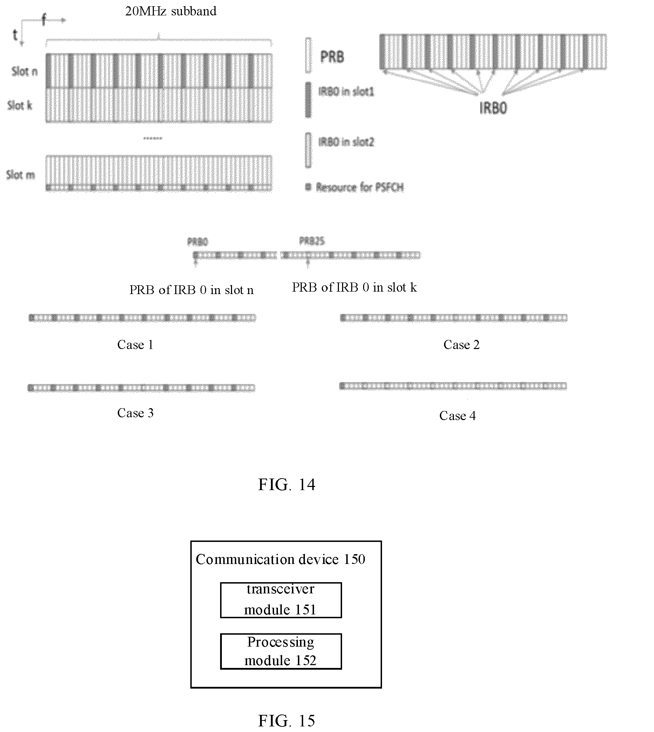

As illustrated in FIG. 14, FIG. 14 is a flowchart of a method for receiving a feedback information provided by an embodiment of the disclosure. As illustrated in FIG. 14, based on the method for receiving feedback information provided in the disclosure, a process of receiving the feedback information in a practical application scenario includes following steps.

Assuming that transmission of the PSCCH/PSSCH is performed using an IRBO in a slot n, or using an IRBO in a slot k, its associated PSFCH transmission resources both include a PSFCH resource IRBO in a slot m.

In Case 1, when a PSCCH/PSSCH is received via an IRBO in a slot n, and no PSCCH/PSSCH is received via an IRBO in a slot m, transmission of the feedback information corresponding to the PSCCH/PSSCH for the IRBO in the slot n is performed via all PRBs of the IRBO in the slot m.

In Case 2, when no PSCCH/PSSCH is received via an IRBO in a slot n, and the PSCCH/PSSCH is received via an IRBO in a slot m, transmission of the feedback information corresponding to the PSCCH/PSSCH for the IRBO in the slot m is performed via all PRBs of the IRBO in the slot m.

In Case 3, when a PSCCH/PSSCH1 is received via an IRBO in a slot n, and a PSCCH/PSSCH2 is received via an IRBO in a slot m, a correspondence between the PSCCH/PSSCH1 and the PSCCH/PSSCH2, and PRBs on the IRBO is determined, and the PSCCH/PSSCH1 and the PSCCH/PSSCH2 correspond to PRB0 and PRB25 on the IRBO, respectively. Assuming the PSCCH/PSSCH1 has a higher priority, transmission of feedback information corresponding to the PSCCH/PSSCH2 is performed on the PRB 25, and transmission of feedback information corresponding to the PSCCH/PSSCH1 is performed on PRBs other than the IRBO.

In Case 4, when a PSCCH/PSSCH1 is received via an IRBO in a slot n, and a PSCCH/PSSCH2 is received via an IRBO in a slot m, a correspondence between the PSCCH/PSSCH1 and the PSCCH/PSSCH2, and PRBs on the IRBO is determined, and the PSCCH/PSSCH1 and the PSCCH/PSSCH2 correspond to PRB0 and PRB25 on the IRBO, respectively. Assuming the PSCCH/PSSCH2 has a higher priority, transmission of feedback information corresponding to the PSCCH/PSSCH1 is performed on the PRB 0, and transmission of feedback information corresponding to the PSCCH/PSSCH2 is performed on PRBs other than the IRBO.

In order to implement the functions in the methods provided in the above embodiments of the disclosure, the terminal device may include a hardware structure, a software module, and implement each of the above functions in the form of a hardware structure, a software module, or a combination of the hardware structure and the software module. A certain function of the above-described functions may be performed by a hardware structure, a software module, or a combination of the hardware structure and the software module.

FIG. 15 is a schematic diagram of a communication device 150 provided by an embodiment of the disclosure. The communication device 150 shown in FIG. 15 may include a transceiver module 151 and a processing module 152. The transceiver module 151 may include a transmitting module and/or a receiving module. The transmitting module is used to implement a transmitting function, and the receiving module is used to implement a receiving function. The transceiver module 151 may implement the transmitting function and/or the receiving function.

The communication device 150 may be a terminal device, a device in the terminal device, or a device capable of being used together with the terminal device.

If the communication device 150 is a terminal device, the communication device 150 includes:

a transceiver module 151, configured to, send N pieces of different feedback information via one first interlaced resource block (IRB) during a terminal device sending via a sidelink (SL), where N is a positive integer.

Optionally, one of the N pieces of feedback information is a hybrid automatic repeat request-acknowledgement (HARQ-ACK) corresponding to a physical SL control channel (PSCCH) or physical SL shared channel (PSSCH) transmission.

The communication device 150 also includes: a processing module 152, configured to determine a correspondence between M physical resource blocks (PRBs), which belong to the first IRB, and the N pieces of feedback information, where M is a positive integer and indicates a number of PRBs included in the first IRB; determine first information to be transmitted on a PRBₘ, which belongs to the first IRB, according to the correspondence, where the PRBₘ is one of the M PRB. The transceiver module 151 is further configured to perform transmission of the first information on the PRBₘ, in which the first information belongs to the N pieces of feedback information or the first information does not indicate any feedback information.

Optionally, the transceiver module 151 is configured to: perform transmission of the first information on the PRBₘ using different cyclic shift values of a base sequence.

Optionally, the first information is one feedback information Iᵢ of the N pieces of feedback information, the processing module 152 is configured to: determine a time-frequency location occupied by a PSCCH and/or PSSCH transmission corresponding to the feedback information Iᵢ, in which the time-frequency location includes at least one of a time-domain location, a frequency-domain location and a time-frequency start location; and determine the PRBₘ corresponding to the feedback information Iᵢ based on the time-frequency location corresponding to the feedback information Iᵢ and the correspondence.

Optionally, the processing module 152 is configured to: determine that the correspondence is a correspondence between N time-frequency locations in a time-frequency location set and the M PRBs, and determine the PRBₘ corresponding to the feedback information Iᵢ based on the correspondence.

Optionally, the time-frequency location set is one of: a set of possible time-domain locations and/or frequency-domain locations for PSCCH/PSSCH transmission corresponding to feedback information to be transmitted using the first IRB; or a set of possible time-frequency start locations for PSCCH/PSSCH transmission corresponding to the feedback information to be transmitted using the first IRB; or a set of time-frequency resource locations within a feedback time window in a SL resource pool, in which a start time and an end time of the feedback time window are determined according to a time location where the first IRB is.

Optionally, the processing module 152 is configured to: divide the M PRBs into N orthogonal PRB subsets in a first preset order, sort time-frequency locations in the time-frequency location set in a second preset order, and obtain the correspondence by mapping the sorted time-frequency locations to the PRB subsets one-to-one.

Optionally, the processing module 152 is configured to: determine a PRB subset associated with a time-frequency location corresponding to the feedback information Iᵢ from the correspondence, and determine a PRB in the associated PRB subset as the PRBₘ.

Optionally, the time-domain location is a time unit where a PSCCH/PSSCH transmission is, and the frequency-domain location is a PRB, an IRB or a sub-channel of a lowest frequency location used for the PSCCH/PSSCH transmission.

Optionally, the processing module 152 is configured to: determine a base sequence and/or a cyclic shift value in response to the first information not indicating any feedback information among the N pieces of feedback information, and determine the first information to be transmitted on the PRBₘ based on the base sequence and/or the cyclic shift value.

Further, the processing module 152 is configured to: determine feedback information with a highest priority among the N pieces of feedback information in response to the first information corresponding to the PRBₘ not being feedback information among the N pieces of feedback information, and determine the feedback information with the highest priority as the feedback information to be transmitted on the PRBₘ.

Additionally, the transceiver module 151 is configured to: perform transmission of the feedback information with the highest priority on the PRBₘ and a PRBₙ, respectively, in response to determining that the feedback information with the highest priority is feedback information to be transmitted on the PRBₙ in the first IRB.

Optionally, the processing module 152 is configured to: determine the first information to be transmitted on the PRBₘ according to the correspondence and priority information corresponding to the N pieces of feedback information.

Optionally, the processing module 152 is configured to: determine feedback information Iᵢ corresponding to the PRBₘ among the N pieces of feedback information based on the correspondence; determine feedback information Iⱼ with a highest priority among other feedback information of the N pieces of feedback information excluding the feedback information Iᵢ; and in response to determining that a priority corresponding to the feedback information Iᵢ is not lower than a priority of the feedback information Iⱼ by a preset number of priorities, determine that the feedback information Iᵢ is feedback information to be transmitted on the PRBₘ, otherwise, determine that the feedback information Iⱼ is feedback information to be transmitted on the PRBₘ.

If the communication device 150 is another type of terminal device, the communication device 150 includes:
a transceiver module 151, configured to receive N pieces of different feedback information on one first interlaced resource block (IRB) during a terminal device receiving via a sidelink (SL), where N is a positive integer.

Optionally, one of the N pieces of feedback information is a hybrid automatic repeat request-acknowledgement (HARQ-ACK) corresponding to a physical SL control channel (PSCCH) or physical SL shared channel (PSSCH) transmission.

The communication device 150 also includes: a processing module 152, configured to determine a correspondence between M physical resource blocks (PRBs), which belong to the first IRB, and the N pieces of feedback information, where M is a positive integer and indicates a number of PRBs included in the first IRB; and determine first information to be transmitted on a PRBₘ, which belongs to the first IRB, according to the correspondence, where the PRBₘ is one of the M PRBs. The transceiver module 151 is configured to receive the first information on the PRBₘ, in which the first information belongs to the N pieces of feedback information or the first information does not indicate any feedback information.

Optionally, the first information is one feedback information Iᵢ of the N pieces of feedback information, the processing module 152 is further configured to: determine a time-frequency location occupied by a PSCCH and/or PSSCH transmission corresponding to the feedback information Iᵢ, in which, the time-frequency location includes at least one of a time-domain location, a frequency-domain location or a time-frequency start location; and determine the PRBₘ corresponding to the feedback information Iᵢ based on the time-frequency location corresponding to the feedback information Iᵢ and the correspondence.

Optionally, the processing module 152 is further configured to: determine that the correspondence is a correspondence between N time-frequency locations in a time-frequency location set and the M PRBs, and determine the PRBₘ corresponding to the feedback information Iᵢ based on the correspondence.

Optionally, the processing module 152 is further configured to: divide the M PRBs into N orthogonal PRB subsets in a first preset order, sort time-frequency locations in the time-frequency location set in a second preset order, and obtain the correspondence by mapping the sorted time-frequency locations to the PRB subsets one-to-one.

Optionally, the processing module 152 is further configured to: determine a PRB subset associated with a time-frequency location corresponding to the feedback information Iᵢ from the correspondence, and determine a PRB in the associated PRB subset as the PRBₘ.

Further, the transceiver module 151 is configured to: receive feedback information with a highest priority among the N pieces of feedback information on the PRBₘ in response to the first information corresponding to the PRBₘ not being feedback information among the N pieces of feedback information.

Additionally, the transceiver module 151 is configured to: receive the feedback information with the highest priority on the PRBₘ and a PRBₙ, respectively, in response to determining that the feedback information with the highest priority is feedback information to be transmitted on the PRBₙ in the first IRB.

Optionally, the processing module 152 is further configured to: determine the first information to be transmitted on the PRBₘ according to the correspondence and priority information corresponding to the N pieces of feedback information.

Optionally, the processing module 152 is further configured to: determine feedback information Iᵢ corresponding to the PRBₘ among the N pieces of feedback information according to the correspondence; determine feedback information Iⱼ with a highest priority among other feedback information of the N pieces of feedback information excluding the feedback information Iᵢ; and in response to determining that a priority corresponding to the feedback information Iᵢ is not lower than a priority of the feedback information Iⱼ by a preset number of priorities, determine that the feedback information Iᵢ is feedback information to be transmitted on the PRBₘ, otherwise, determine that the feedback information Iⱼ is feedback information to be transmitted on the PRBₘ.

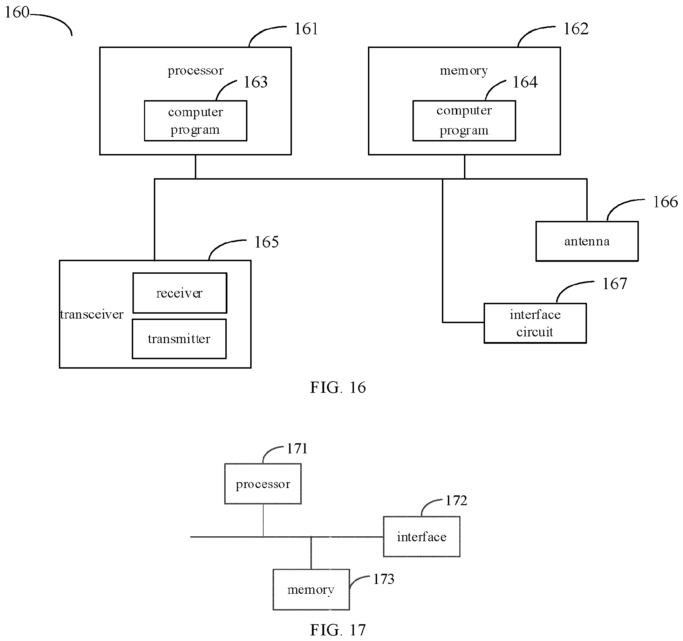

As illustrated in FIG. 16, FIG. 16 is a schematic diagram of a communication device 160 according to an embodiment of the disclosure. The communication device 160 may be a terminal device, or a chip, a chip system or a processor that supports the terminal device to realize the above-described methods. The device is used to realize the methods described in the above method embodiments with reference to the description of the above-described method embodiments.

The communication device 160 includes one or more processors 161. The processor 161 may be a general purpose processor or a dedicated processor, such as, a baseband processor or a central processor. The baseband processor is used for processing communication protocols and communication data. The central processor is used for controlling the communication device (e.g., base station, baseband chip, terminal device, terminal device chip, DU, or CU), executing computer programs, and processing data of the computer programs.

Further, the communication device 160 includes one or more memories 162 on which computer programs 164 may be stored. The processor 161 executes the computer programs 164 to cause the communication device 160 to perform the methods described in the above method embodiments. Optionally, the memory 162 may also store data. The communication device 160 and the memory 162 may be provided separately or may be integrated together.

Optionally, the communication device 160 may also include a transceiver 165 and an antenna 166. The transceiver 165 may be referred to as transceiver unit, transceiver machine, or transceiver circuit, for realizing the transceiver function. The transceiver 165 may include a receiver and a transmitter. The receiver may be referred to as receiver machine or receiving circuit, for realizing the receiving function. The transmitter may be referred to as transmitter machine or transmitting circuit, for realizing the transmitting function.

Optionally, the communication device 160 may also include one or more interface circuits 167. The interface circuits 167 are used to receive code instructions and transmit them to the processor 161. The processor 161 runs the code instructions to cause the communication device 160 to perform the method described in the method embodiments.

In an implementation, the processor 161 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 161 may store a computer program 163. When the computer program 163 runs on the processor 161, the communication device 160 is caused to perform the methods described in the method embodiments above. The computer program 163 may be solidified in the processor 161, in which case the processor 161 may be implemented by hardware.

In an implementation, the communication device 160 may include circuits. The circuits may implement the sending, receiving or communicating function in the preceding method embodiments. The processor and transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a terminal device, but the scope of the communication device described in the disclosure is not limited thereto, and the structure of the communication device may not be limited by FIG. 16. The communication device may be a stand-alone device or may be part of a larger device. For example, the described communication device may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that may be embedded within other devices;
(5) receivers, terminal devices, smart terminal devices, cellular phones, wireless devices, handheld machines, mobile units, in-vehicle devices, network devices, cloud devices, artificial intelligence devices, and the like; and
(6) others.

The case where the communication device may be a chip or a chip system may be referred to the schematic diagram of a chip shown in FIG. 17. In FIG. 17, the chip includes a processor 171 and an interface 172. There may be one or more processors 171, and there may be multiple interfaces 172.

Optionally, the chip further includes a memory 173 used to store necessary computer programs and data.

The chip is used to implement the function of any of the above method embodiments when being executed.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of this disclosure.

Embodiments of the disclosure also provide a system for sending feedback information. The system includes the communication device as the terminal device in the preceding embodiment of FIG. 15, or, the system includes a communication device as the terminal device in the preceding embodiment of FIG. 16.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure are implemented. The computer is a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device integrated by one or more usable mediums, such as a server and a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that may be understood by the communication device, and the values or representations of the parameters may be other values or representations that may be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

The above are only specific implementations of the disclosure, but the scope of protection of the disclosure is not limited thereto. Those skilled in the art familiar to this technical field can easily think of changes or substitutions in the technical scope disclosed by the disclosure. Therefore, the scope of protection of the disclosure shall be governed by the scope of protection of the appended claims.

## Claims

1. A method performed by a communication device (160) for sending feedback information, the method comprising:
sending (S21) N pieces of different feedback information via one first interlaced resource block, IRB, during a terminal device sending event via a sidelink, SL, where N is a positive integer;
wherein sending (S21) the N pieces of different feedback information via one first IRB comprises: determining (S31) a correspondence between M physical resource blocks, PRBs, which belong to the first IRB, and the N pieces of feedback information, where M is a positive integer and indicates a number of PRBs included in the first IRB; determining (S32) first information to be transmitted on a PRBₘ, which belongs to the first IRB, according to the correspondence, where the PRBₘ is one of the M PRBs; and performing (S33) transmission of the first information on the PRBₘ; wherein the first information belongs to the N pieces of feedback information or the first information does not indicate any feedback information; and
being **characterized in that**, the method further comprises:
determining (S63) feedback information with a highest priority among the N pieces of feedback information in response to the first information corresponding to the PRBₘ not being feedback information among the N pieces of feedback information; and determining (S64) the feedback information with the highest priority as the feedback information to be transmitted on the PRBₘ; and
performing (S65) transmission of the feedback information with the highest priority on the PRBₘ and a PRBₙ, respectively, in response to determining that the feedback information with the highest priority is feedback information to be transmitted on the PRBₙ in the first IRB.

2. The method of claim 1, wherein one of the N pieces of feedback information is a hybrid automatic repeat request-acknowledgement, HARQ-ACK, corresponding to a physical SL control channel, PSCCH, or physical SL shared channel, PSSCH, transmission.

3. The method of claim 1 or 2, wherein performing (S33) transmission of the first information on the PRBₘ comprises:
performing transmission of the first information on the PRBₘ using different cyclic shift values of a base sequence.

4. The method of claim 1, wherein the first information is one feedback information Iᵢ of the N pieces of feedback information, and determining a PRBₘ corresponding to the feedback information Iᵢ according to the correspondence comprises:
determining a time-frequency location occupied by a PSCCH and/or PSSCH transmission corresponding to the feedback information Iᵢ, wherein the time-frequency location comprises at least one of a time-domain location, a frequency-domain location and a time-frequency start location; and
determining the PRBₘ corresponding to the feedback information Iᵢ based on the time-frequency location corresponding to the feedback information Iᵢ and the correspondence;
optionally determining the PRBₘ corresponding to the feedback information Iᵢ based on the time-frequency location corresponding to the feedback information Iᵢ and the correspondence comprises:
determining that the correspondence is a correspondence between N time-frequency locations in a time-frequency location set and the M PRBs; and
determining the PRBₘ corresponding to the feedback information Iᵢ based on the correspondence.

5. The method of claim 4, wherein the time-frequency location set is one of:
a set of possible time-domain locations and/or frequency-domain locations for PSCCH/PSSCH transmission corresponding to feedback information to be transmitted using the first IRB; or
a set of possible time-frequency start locations for PSCCH/PSSCH transmission corresponding to the feedback information to be transmitted using the first IRB; or
a set of time-frequency resource locations within a feedback time window in a SL resource pool, wherein a start time and an end time of the feedback time window are determined according to a time location where the first IRB is.

6. The method of claim 4 or 5, wherein determining the correspondence between the N time-frequency locations and the M PRBs comprises:
dividing the M PRBs into N orthogonal PRB subsets in a first preset order;
sorting time-frequency locations in the time-frequency location set in a second preset order; and
obtaining the correspondence by mapping the sorted time-frequency locations to the PRB subsets one-to-one;
optionally determining the PRBₘ corresponding to the feedback information Iᵢ based on the correspondence comprises:
determining a PRB subset associated with a time-frequency location corresponding to the feedback information Iᵢ from the correspondence; and
determining a PRB in the associated PRB subset as the PRBₘ.

7. The method of claim 5 or 6, wherein the time-domain location is a time unit where a PSCCH/PSSCH transmission is, and the frequency-domain location is a PRB, an IRB or a sub-channel of a lowest frequency location used for the PSCCH/PSSCH transmission.

8. The method of claim 1, further comprising:
determining a base sequence and/or a cyclic shift value in response to the first information not indicating any feedback information among the N pieces of feedback information; and
determining the first information to be transmitted on the PRBₘ based on the base sequence and/or the cyclic shift value.

9. The method of any one of claims 1 to 8, wherein determining (S32) the first information to be transmitted on the PRBₘ in the first IRB according to the correspondence comprises:
determining (S72) the first information to be transmitted on the PRBₘ according to the correspondence and priority information corresponding to the N pieces of feedback information;
optionally determining (S72) the first information to be transmitted on the PRBₘ according to the correspondence and the priority information corresponding to the N pieces of feedback information comprises:
determining feedback information Iᵢ corresponding to the PRBₘ among the N pieces of feedback information based on the correspondence;
determining feedback information Iⱼ with a highest priority among other feedback information of the N pieces of feedback information excluding the feedback information Iᵢ; and
in response to determining that a priority corresponding to the feedback information Iᵢ is not lower than a priority of the feedback information Iⱼ by a preset number of priorities, determining that the feedback information Iᵢ is feedback information to be transmitted on the PRBₘ;
in response to determining that a priority corresponding to the feedback information Iᵢ is lower than a priority of the feedback information Iⱼ by a preset number of priorities, determining that the feedback information Iⱼ is feedback information to be transmitted on the PRBₘ.

10. A method performed by a communication device (160) for receiving feedback information, the method comprising:
receiving (S81) N pieces of different feedback information on one first interlaced resource block, IRB, during a terminal device receiving event via a sidelink, SL, where N is a positive integer;
wherein receiving (S81) the N pieces of different feedback information on one first IRB comprises: determining (S91)
a correspondence between M physical resource blocks, PRBs, which belong to the first IRB, and the N pieces of feedback information, where M is a positive integer and indicates a number of PRBs included in the first IRB; determining (S92) first information to be transmitted on a PRBₘ, which belongs to the first IRB, according to the correspondence, where the PRBₘ is one of the M PRBs; and receiving (S93) the first information on the PRBₘ; wherein the first information belongs to the N pieces of feedback information or the first information does not indicate any feedback information;
being **characterized in that**, the method further comprises:
receiving feedback information with a highest priority among the N pieces of feedback information on the PRBₘ in response to the first information corresponding to the PRBₘ not being feedback information among the N pieces of feedback information; and
receiving the feedback information with the highest priority on the PRBₘ and a PRBₙ, respectively, in response to determining that the feedback information with the highest priority is feedback information to be transmitted on the PRBₙ in the first IRB.

11. A communication device (160) comprising: a processor (161) and a memory (162) having a computer program (164) stored thereon, wherein when the processor (161) executes the computer program (164) stored on the memory (162), the device (160) is caused to implement the method of any one of claims 1-10.

12. A computer readable storage medium for storing instructions, which when executed by a computer, cause the computer to implement the method of any one of claims 1-10.

## Patentansprüche

1. Ein Verfahren zum Senden von Rückkopplungsinformationen, das durch eine Kommunikationsvorrichtung (160) durchgeführt wird, wobei das Verfahren folgende Schritte aufweist:
Senden (S21) von N Teilen von unterschiedlichen Rückkopplungsinformationen über einen ersten verschachtelten Ressourcenblock, IRB, während eines Sendeereignisses eines Endgeräts über einen Sidelink, SL, wobei N eine positive ganze Zahl ist;
wobei das Senden (S21) der N Teile von unterschiedlichen Rückkopplungsinformationen über einen ersten IRB folgende Schritte aufweist: Bestimmen (S31) einer Entsprechung zwischen M physischen Ressourcenblöcken, PRB, die zu dem ersten IRB gehören, und den N Teilen von Rückkopplungsinformationen, wobei M eine positive ganze Zahl ist und eine Anzahl von PRB angibt, die in dem ersten IRB enthalten sind; Bestimmen (S32) von ersten Informationen, die auf einem PRBₘ zu übertragen sind, der zu dem ersten IRB gehört, gemäß der Entsprechung, wobei der PRBₘ einer der M PRB ist; und Durchführen (S33) einer Übertragung der ersten Informationen auf dem PRBₘ; wobei die ersten Informationen zu den N Teilen von Rückkopplungsinformationen gehören oder die ersten Informationen keine Rückkopplungsinformationen angeben; und
**dadurch gekennzeichnet, dass** das Verfahren ferner folgende Schritte aufweist:
Bestimmen (S63) von Rückkopplungsinformationen mit einer höchsten Priorität unter den N Teilen von Rückkopplungsinformationen ansprechend darauf, dass die ersten Informationen entsprechend dem PRBₘ keine Rückkopplungsinformationen unter den N Teilen von Rückkopplungsinformationen sind; und Bestimmen (S64) der Rückkopplungsinformationen mit der höchsten Priorität als die Rückkopplungsinformationen, die auf dem PRBₘ zu übertragen sind; und
Durchführen (S65) einer Übertragung der Rückkopplungsinformationen mit der höchsten Priorität auf dem PRBₘ bzw. einem PRBₙ ansprechend auf ein Bestimmen, dass die Rückkopplungsinformationen mit der höchsten Priorität Rückkopplungsinformationen sind, die auf dem PRBₙ in dem ersten IRB zu übertragen sind.

2. Das Verfahren gemäß Anspruch 1, wobei einer der N Teile von Rückkopplungsinformationen eine hybride automatische Wiederholungsanfragebestätigung, HARQ-ACK, entsprechend einer Übertragung eines physikalischen SL-Steuerkanals, PSCCH, oder eines gemeinsamen physikalischen SL-Kanals, PSSCH, ist.

3. Das Verfahren gemäß Anspruch 1 oder 2, wobei das Durchführen (S33) einer Übertragung der ersten Informationen auf dem PRBₘ folgenden Schritt aufweist:
Durchführen einer Übertragung der ersten Informationen auf dem PRBₘ unter Verwendung von unterschiedlichen zyklischen Verschiebungswerten einer Basissequenz.

4. Das Verfahren gemäß Anspruch 1, wobei die ersten Informationen eine Rückkopplungsinformation Iᵢ der N Teile von Rückkopplungsinformationen sind, und das Bestimmen eines PRBₘ entsprechend der Rückkopplungsinformation Iᵢ gemäß der Entsprechung folgende Schritte aufweist:
Bestimmen einer Zeit-Frequenz-Position, die durch eine PSCCH- und/oder PSSCH-Übertragung entsprechend der Rückkopplungsinformation Iᵢ belegt ist, wobei die Zeit-Frequenz-Position zumindest eine von einer Zeitbereichsposition, einer Frequenzbereichsposition und einer Zeit-Frequenz-Startposition aufweist; und
Bestimmen des PRBₘ entsprechend der Rückkopplungsinformation Iᵢ basierend auf der Zeit-Frequenz-Position entsprechend der Rückkopplungsinformation Iᵢ und der Entsprechung;
wobei optional das Bestimmen des PRBₘ entsprechend der Rückkopplungsinformation Iᵢ basierend auf der Zeit-Frequenz-Position entsprechend der Rückkopplungsinformation Iᵢ und der Entsprechung folgende Schritte aufweist:
Bestimmen, dass die Entsprechung eine Entsprechung zwischen N Zeit-Frequenz-Positionen in einer Menge von Zeit-Frequenz-Positionen und den M PRB ist; und Bestimmen des PRBₘ entsprechend der Rückkopplungsinformation Iᵢ basierend auf der Entsprechung.

5. Das Verfahren gemäß Anspruch 4, wobei die Menge von Zeit-Frequenz-Positionen eine der folgenden ist:
eine Menge von möglichen Zeitbereichspositionen und/oder Frequenzbereichspositionen für eine PSCCH/PSSCH-Übertragung entsprechend Rückkopplungsinformationen, die unter Verwendung des ersten IRB zu übertragen sind; oder
eine Menge von möglichen Zeit-Frequenz-Startpositionen für eine PSCCH/PSSCH-Übertragung entsprechend den Rückkopplungsinformationen, die unter Verwendung des ersten IRB zu übertragen sind; oder
eine Menge von Zeit-Frequenz-Ressourcenpositionen innerhalb eines Rückkopplungszeitfensters in einem SL-Ressourcenpool, wobei eine Startzeit und eine Endzeit des Rückkopplungszeitfensters gemäß einer Zeitposition bestimmt werden, an der sich der erste IRB befindet.

6. Das Verfahren gemäß Anspruch 4 oder 5, wobei das Bestimmen der Entsprechung zwischen den N Zeit-Frequenz-Positionen und den M PRB folgende Schritte aufweist:
Teilen der M PRB in N orthogonale PRB-Teilmengen in einer ersten voreingestellten Reihenfolge;
Sortieren von Zeit-Frequenz-Positionen in der Menge von Zeit-Frequenz-Positionen in einer zweiten voreingestellten Reihenfolge; und
Erhalten der Entsprechung durch Eins-zu-eins-Abbilden der sortierten Zeit-Frequenz-Positionen auf die PRB-Teilmengen;
wobei das Bestimmen des PRBₘ entsprechend der Rückkopplungsinformation Iᵢ ba-sierend auf der Entsprechung optional folgende Schritte aufweist:
Bestimmen einer PRB-Teilmenge, die einer Zeit-Frequenz-Position entsprechend der Rückkopplungsinformation Iᵢ zugeordnet ist, aus der Entsprechung; und
Bestimmen eines PRB in der zugeordneten PRB-Teilmenge als den PRBₘ.

7. Das Verfahren gemäß Anspruch 5 oder 6, wobei die Zeitbereichsposition eine Zeiteinheit ist, in der sich eine PSCCH/PSSCH-Übertragung befindet, und die Frequenzbereichsposition ein PRB, ein IRB oder ein Teilkanal einer niedrigsten Frequenzposition ist, die für die PSCCH/PSSCH-Übertragung verwendet wird.

8. Das Verfahren gemäß Anspruch 1, das ferner folgende Schritte aufweist:
Bestimmen einer Basissequenz und/oder eines zyklischen Verschiebungswerts ansprechend darauf, dass die ersten Informationen keine Rückkopplungsinformationen unter den N Teilen von Rückkopplungsinformationen angeben; und
Bestimmen der ersten Informationen, die auf dem PRBₘ zu übertragen sind, basierend auf der Basissequenz und/oder dem zyklischen Verschiebungswert.

9. Das Verfahren gemäß einem der Ansprüche 1 bis 8, wobei das Bestimmen (S32) der ersten Informationen, die auf dem PRBₘ zu übertragen sind, in dem ersten IRB gemäß der Entsprechung folgenden Schritt aufweist:
Bestimmen (S72) der ersten Informationen, die auf dem PRBₘ zu übertragen sind, gemäß der Entsprechung und Prioritätsinformationen entsprechend den N Teilen von Rückkopplungsinformationen;
wobei das Bestimmen (S72) der ersten Informationen, die auf dem PRBₘ zu übertragen sind, gemäß der Entsprechung und den Prioritätsinformationen entsprechend den N Teilen von Rückkopplungsinformationen optional folgende Schritte aufweist:
Bestimmen von Rückkopplungsinformation Iᵢ entsprechend dem PRBₘ unter den N Teilen von Rückkopplungsinformationen basierend auf der Entsprechung;
Bestimmen von Rückkopplungsinformation Iⱼ mit einer höchsten Priorität unter anderen Rückkopplungsinformationen der N Teile von Rückkopplungsinformationen mit Ausnahme der Rückkopplungsinformation Iᵢ; und
ansprechend auf ein Bestimmen, dass eine Priorität entsprechend der Rückkopplungsinformation Iᵢ nicht niedriger als eine Priorität der Rückkopplungsinformation Iⱼ um eine voreingestellte Anzahl von Prioritäten ist, Bestimmen, dass die Rückkopplungsinformation Iᵢ eine Rückkopplungsinformation ist, die auf dem PRBₘ zu übertragen ist;
ansprechend auf ein Bestimmen, dass eine Priorität entsprechend der Rückkopplungsinformation Iᵢ niedriger als eine Priorität der Rückkopplungsinformation Iⱼ um eine voreingestellte Anzahl von Prioritäten ist, Bestimmen, dass die Rückkopplungsinformation Iⱼ eine Rückkopplungsinformation ist, die auf dem PRBₘ zu übertragen ist.

10. Ein Verfahren zum Empfangen von Rückkopplungsinformationen, das durch eine Kommunikationsvorrichtung (160) durchgeführt, wird wobei das Verfahren folgenden Schritt aufweist:
Empfangen (S81) von N Teilen von unterschiedlichen Rückkopplungsinformationen auf einem ersten verschachtelten Ressourcenblock, IRB, während eines Empfangsereignisses eines Endgeräts über einen Sidelink, SL, wobei N eine positive ganze Zahl ist;
wobei das Empfangen (S81) der N Teile von unterschiedlichen Rückkopplungsinformationen auf einem ersten IRB folgende Schritte aufweist: Bestimmen (S91) einer Entsprechung zwischen M physischen Ressourcenblöcken, PRB, die zu dem ersten IRB gehören, und den N Teilen von Rückkopplungsinformationen, wobei M eine positive ganze Zahl ist und eine Anzahl von PRB angibt, die in dem ersten IRB enthalten sind; Bestimmen (S92) von ersten Informationen, die auf einem PRBₘ zu übertragen sind, der zu dem ersten IRB gehört, gemäß der Entsprechung, wobei der PRBₘ einer der M PRB ist; und Empfangen (S93) der ersten Informationen auf dem PRBₘ; wobei die ersten Informationen zu den N Teilen von Rückkopplungsinformationen gehören oder die ersten Informationen keine Rückkopplungsinformationen angeben;
**dadurch gekennzeichnet, dass** das Verfahren ferner folgende Schritte aufweist:
Empfangen von Rückkopplungsinformationen mit einer höchsten Priorität unter den N Teilen von Rückkopplungsinformationen auf dem PRBₘ ansprechend darauf, dass die ersten Informationen entsprechend dem PRBₘ keine Rückkopplungsinformationen unter den N Teilen von Rückkopplungsinformationen sind; und
Empfangen der Rückkopplungsinformationen mit der höchsten Priorität auf dem PRBₘ bzw. einem PRBₙ ansprechend auf ein Bestimmen, dass die Rückkopplungsinformationen mit der höchsten Priorität Rückkopplungsinformationen sind, die auf dem PRBₙ in dem ersten IRB zu übertragen sind.

11. Eine Kommunikationsvorrichtung (160), die folgende Merkmale aufweist: einen Prozessor (161) und einen Speicher (162) mit einem Computerprogramm (164), das darauf gespeichert ist, wobei dann, wenn der Prozessor (161) das Computerprogramm (164) ausführt, das auf dem Speicher (162) gespeichert ist, die Vorrichtung (160) veranlasst wird, das Verfahren gemäß einem der Ansprüche 1 bis 10 zu implementieren.

12. Ein computerlesbares Speichermedium zum Speichern von Anweisungen, die dann, wenn dieselben durch einen Computer ausgeführt werden, den Computer veranlassen, das Verfahren gemäß einem der Ansprüche 1 bis 10 zu implementieren.

## Revendications

1. Procédé, réalisé par un dispositif de communication (160), pour envoyer des informations de rétroaction, le procédé comprenant :
l'envoi (S21) de N éléments d'informations de rétroaction différentes par l'intermédiaire d'un premier bloc de ressources entrelacées, IRB, au cours d'un événement d'envoi de dispositif terminal par l'intermédiaire d'une liaison latérale, SL, où N est un entier positif ;
dans lequel l'envoi (S21) des N éléments d'informations de rétroaction différentes par l'intermédiaire d'un premier IRB comprend : la détermination (S31) d'une correspondance entre M blocs de ressources physiques, PRB, qui appartiennent au premier IRB, et les N éléments d'informations de rétroaction, où M est un entier positif et indique un nombre de PRB inclus dans le premier IRB ; la détermination (S32) de premières informations à transmettre sur un PRBₘ, qui appartient au premier IRB, selon la correspondance, où le PRBₘ est l'un des M PRB ; et la réalisation (S33) d'une transmission des premières informations sur le PRBₘ ; dans lequel les premières informations appartiennent aux N éléments d'informations de rétroaction ou les premières informations n'indiquent aucune information de rétroaction ; et
**caractérisé en ce que** le procédé comprend en outre :
la détermination (S63) d'informations de rétroaction avec une priorité la plus élevée parmi les N éléments d'informations de rétroaction, en réponse au fait que les premières informations correspondant au PRBₘ ne sont pas des informations de rétroaction parmi les N éléments d'informations de rétroaction ; et la détermination (S64) des informations de rétroaction avec la priorité la plus élevée en tant qu'informations de rétroaction à transmettre sur le PRBₘ ; et
la réalisation (S65) d'une transmission des informations de rétroaction avec la priorité la plus élevée sur le PRBₘ et un PRBₙ, respectivement, en réponse à la détermination que les informations de rétroaction avec la priorité la plus élevée sont des informations de rétroaction à transmettre sur le PRBₙ dans le premier IRB.

2. Procédé selon la revendication 1, dans lequel l'un des N éléments d'informations de rétroaction est un accusé de réception de demande de répétition automatique hybride, HARQ-ACK, correspondant à une transmission de canal de contrôle physique SL, PSCCH, ou de canal partagé SL physique, PSSCH.

3. Procédé selon la revendication 1 ou 2, dans lequel la réalisation (S33) d'une transmission des premières informations sur le PRBₘ comprend :
la réalisation d'une transmission des premières informations sur le PRBₘ en utilisant différentes valeurs de décalage cyclique d'une séquence de base.

4. Procédé selon la revendication 1, dans lequel les premières informations sont des informations de rétroaction Iᵢ des N éléments d'informations de rétroaction, et la détermination d'un PRBₘ correspondant aux informations de rétroaction Iᵢ selon la correspondance comprend :
la détermination d'une position temps-fréquence occupée par une transmission PSCCH et/ou PSSCH correspondant aux informations de rétroaction Iᵢ, dans lequel la position temps-fréquence comprend au moins l'une d'une position dans le domaine temporel, une position dans le domaine fréquentiel et une position de départ temps-fréquence ; et
la détermination du PRBₘ correspondant aux informations de rétroaction Iᵢ sur la base de la position temps-fréquence correspondant aux informations de rétroaction Iᵢ et de la correspondance ;
facultativement, la détermination du PRBₘ correspondant aux informations de rétroaction Iᵢ sur la base de la position temps-fréquence correspondant aux informations de rétroaction Iᵢ et la correspondance comprend :
la détermination que la correspondance est une correspondance entre N positions temps-fréquence dans un ensemble de positions temps-fréquence et les M PRB ; et
la détermination du PRBₘ correspondant aux informations de rétroaction Iᵢ sur la base de la correspondance.

5. Procédé selon la revendication 4, dans lequel l'ensemble de positions temps-fréquence est l'un des éléments suivants :
un ensemble de positions possibles dans le domaine temporel et/ou positions possibles dans le domaine fréquentiel pour une transmission PSCCH/PSSCH correspondant aux informations de rétroaction à transmettre en utilisant le premier IRB ; ou
un ensemble de positions de départ temps-fréquence possibles pour une transmission PSCCH/PSSCH correspondant aux informations de rétroaction à transmettre en utilisant le premier IRB ; ou
un ensemble de positions de ressources temps-fréquence dans une fenêtre temporelle de rétroaction dans un groupe de ressources SL, dans lequel un temps de départ et un temps de fin de la fenêtre temporelle de rétroaction sont déterminés selon une position temporelle où le premier IRB se trouve.

6. Procédé selon la revendication 4 ou 5, dans lequel la détermination de la correspondance entre les N positions temps-fréquence et les M PRB comprend :
la division des M PRB dans des N sous-ensembles de PRB orthogonaux dans un premier ordre prédéfini ;
le tri des positions temps-fréquence dans l'ensemble de positions temps-fréquence dans un deuxième ordre prédéfini ; et
l'obtention de la correspondance par mise en correspondance des positions temps-fréquence triées et des sous-ensembles de PRB un à un ;
facultativement, la détermination du PRBₘ correspondant aux informations de rétroaction Iᵢ sur la base de la correspondance comprend :
la détermination d'un sous-ensemble de PRB associé à une position temps-fréquence correspondant aux informations de rétroaction Iᵢ à partir de la correspondance ; et
la détermination d'un PRB dans le sous-ensemble de PRB associé en tant que PRB ₘ.

7. Procédé selon la revendication 5 ou 6, dans lequel la position dans le domaine temporel est une unité de temps où une transmission PSCCH/PSSCH est, et la position dans le domaine fréquentiel est un PRB, un IRB ou un sous-canal d'une position de fréquence le plus bas utilisé pour la transmission PSCCH/PSSCH.

8. Procédé selon la revendication 1, comprenant en outre :
la détermination d'une séquence de base et/ou d'une valeur de décalage cyclique en réponse au fait que les premières informations n'indiquent aucune information de rétroaction parmi les N éléments d'informations de rétroaction ; et
la détermination des premières informations à transmettre sur le PRBₘ sur la base de la séquence de base et/ou de la valeur de décalage cyclique.

9. Procédé selon l'une quelconque des revendications 1 à 8, dans lequel la détermination (S32) des premières informations à transmettre sur le PRB ₘ dans le premier IRB selon la correspondance comprend :
la détermination (S72) des premières informations à transmettre sur le PRBₘ selon les informations de correspondance et de priorité correspondant aux N éléments d'informations de rétroaction ;
facultativement, la détermination (S72) des premières informations à transmettre sur le PRBₘ selon les informations de correspondance et de priorité correspondant aux N éléments d'informations de rétroaction comprend :
la détermination d'informations de rétroaction Iᵢ correspondant au PRBₘ parmi les N éléments d'informations de rétroaction sur la base de la correspondance ;
la détermination d'informations de rétroaction Iⱼ avec une priorité la plus élevée parmi d'autres informations de rétroaction des N éléments d'informations de rétroaction, à l'exclusion des informations de rétroaction Iᵢ ; et
en réponse à la détermination qu'une priorité correspondant aux informations de rétroaction Iᵢ n'est pas inférieure à une priorité des informations de rétroaction Iⱼ par un nombre de priorités prédéfini, la détermination que les informations de rétroaction Iᵢ sont des informations de rétroaction à transmettre sur le PRBₘ ;
en réponse à la détermination qu'une priorité correspondant aux informations de rétroaction Iᵢ est inférieure à une priorité des informations de rétroaction Iⱼ par un nombre de priorités prédéfini, la détermination que les informations de rétroaction Iⱼ sont des informations de rétroaction à transmettre sur le PRBₘ.

10. Procédé réalisé par un dispositif de communication (160) pour recevoir des informations de rétroaction, le procédé comprenant :
la réception (S81) de N éléments d'informations de rétroaction différentes sur un premier bloc de ressources entrelacées (IRB) au cours d'un événement de réception de dispositif terminal par l'intermédiaire d'une liaison latérale (SL), où N est un entier positif ;
dans lequel la réception (S81) des N éléments d'informations de rétroaction différentes sur un premier IRB comprend : la détermination (S91)
d'une correspondance entre M blocs de ressources physiques (PRB) qui appartiennent au premier IRB, et les N éléments d'informations de rétroaction, où M est un entier positif et indique un nombre de PRB inclus dans le premier IRB ; la détermination (S92) de premières informations à transmettre sur un PRBₘ, qui appartient au premier IRB, selon la correspondance, où le PRBₘ est l'un des M PRB ; et la réception (S93) des premières informations sur le PRBₘ ; dans lequel les premières informations appartiennent aux N éléments d'informations de rétroaction ou les premières informations n'indiquent aucune information de rétroaction ;
**caractérisé en ce que** le procédé comprend en outre :
la réception d'informations de rétroaction avec une priorité la plus élevée parmi les N éléments d'informations de rétroaction sur le PRBₘ, en réponse au fait que les premières informations correspondant au PRBₘ ne sont pas des informations de rétroaction parmi les N éléments d'informations de rétroaction ; et
la réception des informations de rétroaction avec la priorité la plus élevée sur le PRBₘ et un PRBₙ, respectivement, en réponse à la détermination que les informations de rétroaction avec la priorité la plus élevée sont des informations de rétroaction à transmettre sur le PRBₙ dans le premier IRB.

11. Dispositif de communication (160) comprenant : un processeur (161) et une mémoire (162) présentant un programme informatique (164) stocké, dans lequel, lorsque le processeur (161) exécute le programme informatique (164) stocké dans la mémoire (162), le dispositif (160) est amené à mettre en œuvre le procédé selon l'une quelconque des revendications 1 à 10.

12. Support de stockage lisible par ordinateur pour stocker des instructions qui, lorsqu'elles sont exécutées par un ordinateur, amènent l'ordinateur à mettre en œuvre le procédé selon l'une quelconque des revendications 1 à 10.
